# EUROPEAN PATENT SPECIFICATION

(11) **EP 1 632 737 B1**
(45) Date of publication and mention of the grant of the patent: **08.12.2010**
(21) Application number: 05005924.5
(22) Date of filing: 18.03.2005
(51) Int. Cl.: F25B 49/02, F24F 11/00

(54) **Air-conditioner and method for controlling driving thereof**
Klimaanlage und Verfahren zum Steuern ihres Antriebes
Conditionneur d'air et méthode pour commander son entraînement

(30) Priority: 20.08.2004 KR 2004066065
(43) Date of publication of application: 08.03.2006
(73) Proprietor: LG Electronics, Inc., Seoul (KR)
(72) Inventor: Hwang, Yoon-Jei, Seoul (KR); Hyun, Seung-Youp, Guro-Gu, Seoul (KR); Lee, Won-Hee, Seodaemun-Gu, Seoul (KR); Sim, Jae-Hoon, Guro-Gu, Seoul (KR)
(74) Representative: Cohausz & Florack

(56) References cited:
- EP-A- 1 398 576
- US-A- 5 123 256
- US-A- 5 303 561
- US-A1- 2004 118 135
- US-B1- 6 397 610
- US-B2- 6 519 957

## Description

### BACKGROUND OF THE INVENTION

### 1. Field of the Invention

The present invention relates to an air-conditioner, and particularly, to a method for controlling a driving thereof.

### 2. Description of the Prior Art

In general, an air-conditioner, particularly, a unitary air-conditioner is a type of a central cooling and heating system which is used in a factory, an office, a hotel, a house, or the like, and provides cold blast or hot blast to each indoor through a duct installed in a building.

The unitary air-conditioner independently supplies cold blast or hot blast into a zone (e.g., an inner room) where requires for a cooling or a heating through a zone controller installed between ducts placed in the building.

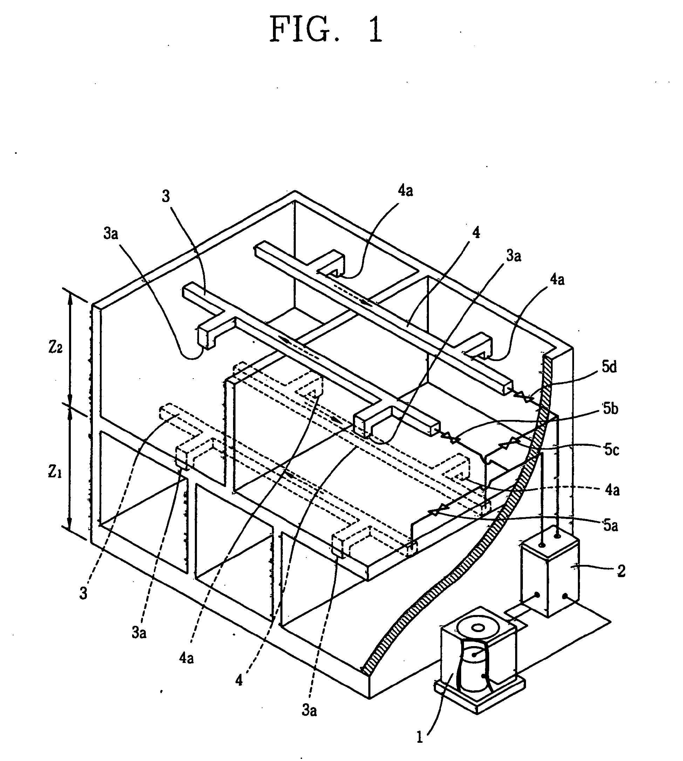

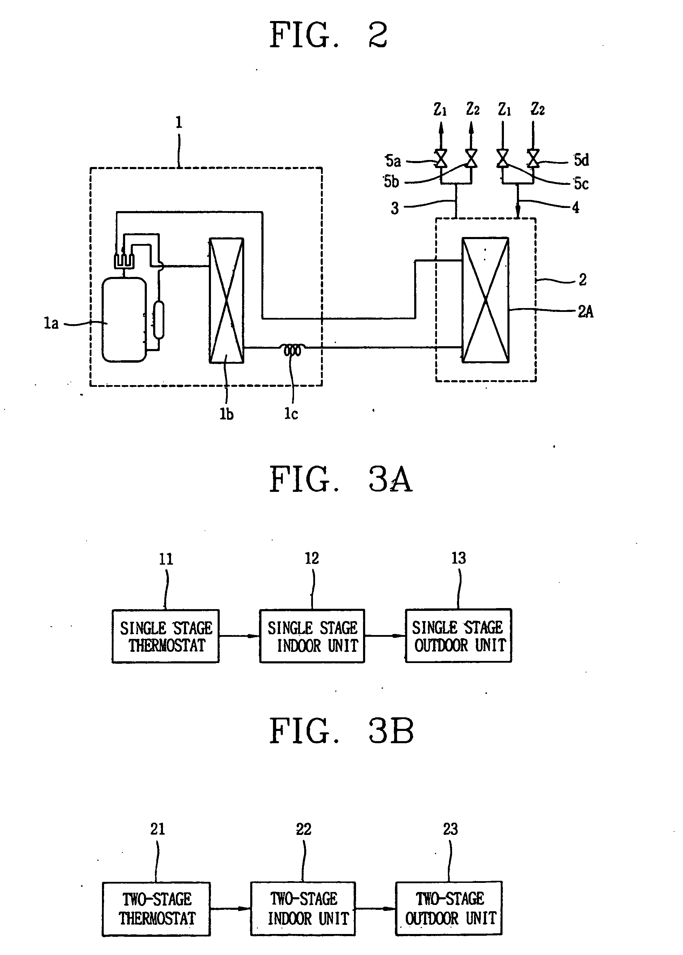

Hereinafter, a construction of a unitary air-conditioner based on the conventional art will be described with reference to Figures 1 and 2.

Figures 1 and 2 are a block diagram and a mimetic diagram showing the construction of the unitary air-conditioner based on the prior art.

Referring to Figure 1, the unitary air-conditioner based on the conventional art is comprised of: an outdoor unit 1 installed to be fixed on the outside of a building (e.g., a second-story house (Z2)); an indoor unit 2 connected to the outdoor unit 1 through a refrigerant pipe and mounted to be fixed in a basement or on a wall of the building, for supplying cold or hot blast in the building; an inlet duct 3 and an outlet duct 4 connected to an inlet port and outlet port of the indoor unit 2, respectively, and installed on walls of each story of the building to be separated; and zone controllers 5a~5d installed between the inlet duct 3 and the outlet duct 4 and distinguishing an inflow air and an outflow air transferred via the inlet duct 3 and the outlet 4.

Referring to Figure 2, the outdoor unit 1 is comprised of: a compressor 1 a compressing refrigerant gas; a first heat exchanger 1 b connected to the compressor 1 a through the refrigerant pipe, and condensing the refrigerant gas when the unitary air-conditioner is in a cooling mode and absorbing latent heat when the unitary air-conditioner is in a heating mode; an expansion valve 1 c decreasing a pressure of the refrigerant gas or expanding the refrigerant gas; and an outdoor fan (not shown) supplying an external air to the first heat exchanger 1b to raise a heat exchanging efficiency of the first heat exchanger 1 b.

The indoor unit 2 is comprised of: a second heat exchanger 2A connected to the first heat exchanger 1b and the expansion valve 1c; and an indoor fan (not shown) placed at the second heat exchanger 2A, for inducing cool blast or hot blast to the inlet duct 3.

The inlet duct 3 and the outlet duct 4 are connected to the inlet port and the outlet port of the indoor unit 2 and mounted on corresponding zones (e.g., a first floor (Z1), a second floor (Z2), etc). Also, the inlet duct 3 and the outlet duct 4 respectively have a discharge opening 3a supplying cold blast or hot blast to a corresponding zone and a suction opening 4a sucking indoor air to circulate the indoor air.

In general, the zone controllers 5a~5d are valves mounted on the inlet duct 3 and the outlet duct 4 installed in corresponding zones (e.g., Z1 and Z2) in order to supply cold blast or hot blast to the corresponding zones (Z1 and Z2). That is, the zone controller 5a~5d are electrically connected to a controller (not shown) of the unitary air-conditioner, and the controller detects a temperature or a humidity of corresponding zones, compares the detected value of the temperature or the humidity with a predetermined value, and controls the zone controllers 5a~5d to be turned on/off according to the compared result.

Problems of the unitary air-conditioner based on the conventional art will be described with reference to Figures 3A and 3B, hereinafter.

Figures 3A and 3B are schematic diagrams showing a instruction of a unitary air-conditioner based on the prior art.

Referring to Figure 3A, the unitary air-conditioner is comprised of a single stage thermostat 11 for detecting an indoor temperature, a single stage indoor unit 12 and a single stage outdoor unit 13.

Furthermore, referring to Figure 3B, the unitary air-conditioner is comprised of a two-stage thermostat 21 for detecting the indoor temperature, a two-stage indoor unit 22 and a two-stage outdoor unit 23.

The single stage indoor unit 12 refers to an indoor unit for rotating an indoor fan installed therein at a predetermined speed (e.g., an intermediate speed). The single stage outdoor unit 13 refers to an outdoor unit for on-off controlling only one compressor installed therein. The two-stage indoor unit 22 refers to an indoor unit for rotating the indoor fan installed therein at a high speed or a low speed. The two-stage outdoor unit 23 refers to an outdoor unit for on-off controlling only a small compression capacity compressor, of the small compression capacity compressor and a large compression capacity compressor, or simultaneously on-off controlling both the two compressors.

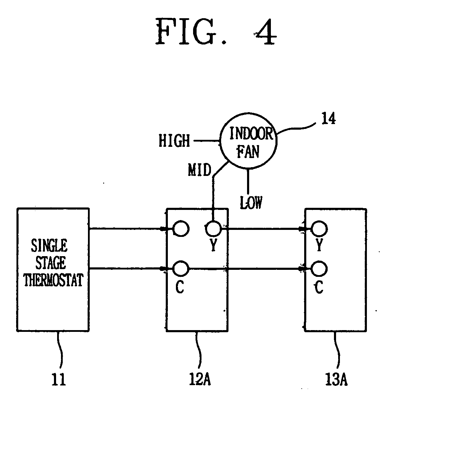

It is assumed that the unitary air-conditioner based on the conventional art is comprised of a single stage thermostat 11, a single stage indoor unit 12 and a single stage outdoor unit 13, of which operation will be described with reference to Figure 4, hereinafter.

Figure 4 is a schematic diagram showing a flow of a control signal in a unitary air-conditioner based on the prior art.

Referring to Figure 4, in case of assuming that the unitary air-conditioner based on the conventional art is comprised of a single stage thermostat 11, a single stage indoor unit 12 and a single stage outdoor unit 13, the single stage thermostat 11 generates a driving signal on the basis of an indoor temperature and a temperature predetermined by a user, and outputs the generated driving signal to a terminal 12A of the single stage indoor unit 12. The single stage indoor unit 12 converts the driving signal into a single stage control signal (Y signal) for driving an indoor fan 14 and a compressor of the single stage outdoor unit 13, and outputs the converted single stage control signal to a terminal (Y terminal) 13A of the single stage outdoor unit 13. That is, whenever the single stage control signal is generated, the unitary air-conditioner based on the conventional art rotates the indoor fan 14 of the single stage indoor unit 12 only at an intermediate speed and operates one compressor of the single stage outdoor unit 13. "C" in Figure 4 indicates a common terminal.

However, the air-conditioner according to the conventional art was driven only when using an outdoor unit which corresponds to the number of driving stage of an indoor unit. That is, there was a problem that the single stage indoor unit could not be connected to the two-stage outdoor unit for use. For instance, in order to allow a user to save his/her costs and improve efficiency of the outdoor unit, the conventional single stage indoor unit could not be connected to the two-stage outdoor unit.

On the other hand, the air-conditioner based on the conventional art is disclosed in U.S.A patent number 6,519,957 issued on 18^{th} of February, 2003.

### SUMMARY OF THE INVENTION

Therefore, an object of the present invention is to provide an air-conditioner capable of connecting a single stage indoor unit to a two-stage outdoor unit, and of improving an ability thereof corresponding to a heating load or a cooling load, and a method for controlling a driving thereof.

To achieve these and other advantages and in accordance with the purpose of the present invention, as embodied and broadly described herein, there is provided an air-conditioner, comprising a converter which receives a first control signal for on-off controlling an indoor fan of an indoor unit and a compressor of an outdoor unit in the air-conditioner, and generates a second control signal for rotating the indoor fan at a high or low speed and varying a compression capacity of the compressor in the outdoor unit on the basis of a generation time of the received first control signal.

To achieve these and other advantages and in accordance with the purpose of the present invention, there is provided a method for controlling a driving of an air-conditioner, comprising the steps of: receiving a first control signal for on-off controlling an indoor fan of an indoor unit and a compressor of an outdoor unit in the air-conditioner, measuring a generation time of the received first control signal; and rotating the indoor fan at a high or a low speed and varying a compression capacity of the compressor of the outdoor unit, depending on the measured generation time.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figures 1 and 2 are a block diagram and a mimetic diagram showing a construction of an air-conditioner according to the prior art;
Figures 3A and 3B are diagrams showing a schematic construction of the air-conditioner according to the prior art;
Figure 4 is a schematic diagram showing a flow of a control signal in the air-conditioner according to the prior art;
Figure 5A is a schematic diagram showing a construction of an air-conditioner in accordance with a preferred embodiment of the present invention;
Figure 5B is a block diagram showing a detailed construction of the air-conditioner in accordance with a preferred embodiment of the present invention; and
Figure 6 is a flow chart showing a method for controlling a driving of an unitary air-conditioner in accordance with a preferred embodiment of the present invention.

### DETAILED DESCRIPTION OF THE PREFERRED EMBODIMENTS

Reference will now be made in detail to the preferred embodiments of the present invention, examples of which are illustrated in the accompanying drawings.

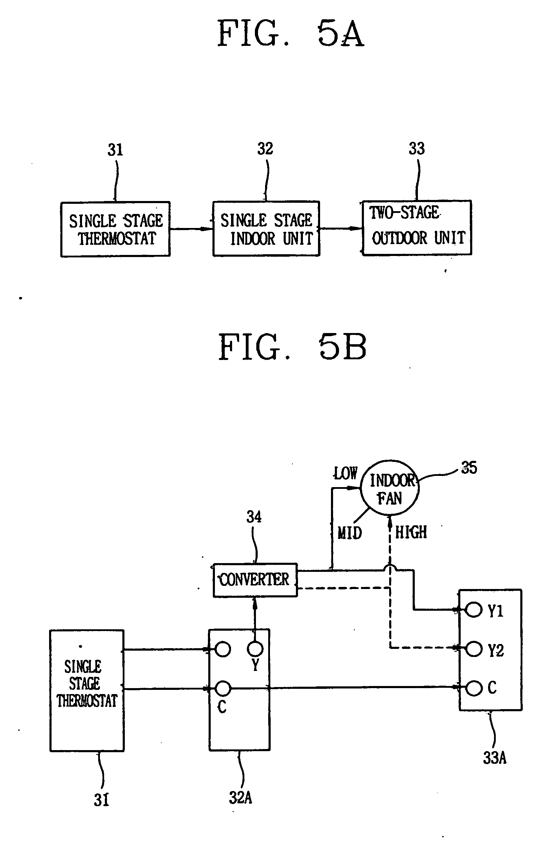

Hereinafter, with reference to Figures 5A to 6, it will be described about a preferred embodiment of an air-conditioner and a method for controlling a driving thereof capable of connecting a single stage indoor unit to a two-stage outdoor unit and of improving an ability thereof corresponding to a heating load or a cooling load, by receiving a first control signal for on-off controlling an indoor fan of an indoor unit and a compressor of an outdoor unit in the air-conditioner, and generating a second control signal for rotating the indoor fan at a high or a low speed and varying a compression capacity of the compressor in the outdoor unit, depending on a generation time of the received first control signal.

Figure 5A is a schematic diagram showing a construction of an air-conditioner in accordance with an embodiment of the present invention.

Referring to Figure 5A, the air-conditioner according to the present invention is comprised of: a single stage thermostat 31, a single stage indoor unit 32 and a two-stage outdoor unit 33. Here, the two-stage outdoor unit 33 may be comprised of a small compression capacity compressor (not shown) and a large compression capacity compressor (not shown), or comprised of one compressor (not shown) of which compression capacity can be varied.

Figure 5B is a block diagram showing a detailed construction of the air-conditioner in accordance with an embodiment of the present invention.

As can be seen from Figures 5A and 5B, the air-conditioner in accordance with an embodiment of the present invention is comprised of: an indoor fan 35 rotated at a high or a low speed on the basis of a two-stage control signal; a two-stage outdoor unit 33 for receiving the two-stage control signal through an outdoor unit terminal 33A, and for driving a compressor with a small compression capacity or a large compression capacity on the basis of the received two-stage control signal; a single stage thermostat 31 for detecting an indoor temperature and generating a driving signal based on the detected indoor temperature and a desired temperature predetermined by a user; a single stage indoor unit 32 for receiving the driving signal through an indoor terminal 32A, and generating a single stage control signal for on-off controlling the indoor fan 35 and the compressor, depending on the received driving signal; a converter 34 for converting the single stage control signal into a two-stage control signal (e.g., Y1 and Y2) to rotate the indoor fan 35 at a high or a low speed and to vary the compression capacity of the two-stage outdoor unit, depending on a generation time of the single stage control signal, and outputting the two-stage control signal (Y1 and Y2) to the indoor fan 35 and the two-stage outdoor unit 33.

Here, if the two-stage outdoor unit 33 is comprised of a small compression capacity compressor and a large compression capacity compressor, the air-conditioner drives only the small compression capacity compressor, or drives both the small compression capacity compressor and the large compression capacity compressor at the same time. At this time, the indoor fan 35 is rotated at a low speed when only the small compression capacity compressor of the two-stage outdoor unit 33 is driven, while the indoor fan 35 is rotated at a high speed when both the small compression capacity compressor and the large compression capacity compressor of the two-stage outdoor unit 33 are driven at the same time.

The converter 34 can be implemented as a microprocessor which detects a generation time of the single stage control signal, compares the generation time with a predetermined reference time, and converts the single stage control signal to the two-stage control signal (i.e., a first control signal Y1 and a second control signal Y2), depending on the compared result. Here, the first control signal Y1 refers to a signal for driving only the small compression capacity compressor of the two-stage outdoor unit 33 and rotating the indoor fan 35 at a low speed. The second control signal Y2 refers to a signal for simultaneously driving both the small compression capacity compressor and the large compression capacity compressor of the two-stage outdoor unit 33 and for rotating the indoor fan 35 at a high speed.

For instance, if the single stage control signal is generated, the converter 34 measures a generation time of the single stage control signal and at the same time generates a first control signal for driving only the small compression capacity compressor of the two-stage outdoor unit 33 and rotating the indoor fan 35 at a low speed. Thereafter, the converter 34 outputs the generated first control signal to the indoor fan 35 and the two-stage outdoor unit 33. If the single stage control signal is generated after a predetermined reference time (e.g., 10 minutes) elapses, the converter 34 generates a second control signal for simultaneously driving the small compression capacity compressor and the large compression capacity compressor of the two-stage outdoor unit 33 and for rotating the indoor fan 35 at a high speed, and then outputs the generated second control signal to the indoor fan 35 and the two-stage outdoor unit 33. If the single stage control signal is generated after a predetermined limitation time (e.g., one hour) elapses, the converter 34 generates the second control signal and outputs the generated second control signal to the indoor fan 35 and the two-stage outdoor unit 33.

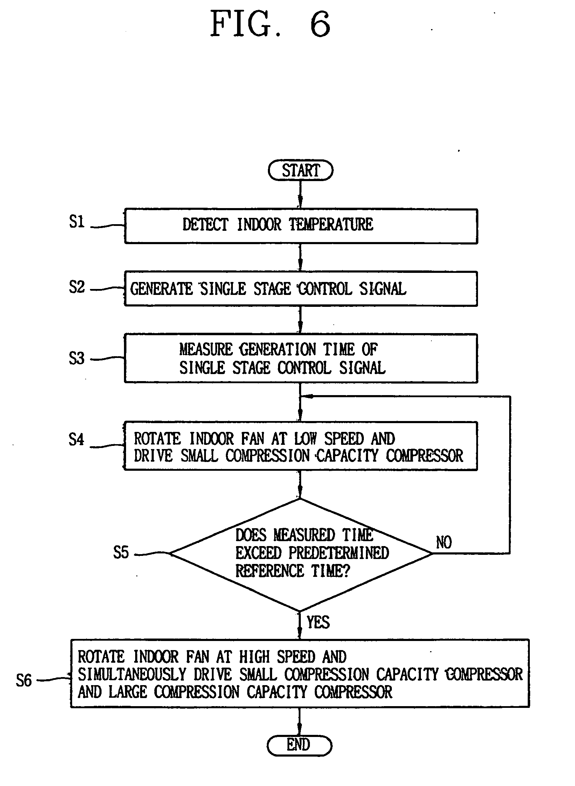

Hereinafter, a method for controlling a driving of an air-conditioner in accordance with the present invention will be described in detail with reference to Figure 6.

Figure 6 is a flow chart showing a method for controlling a driving a unitary air-conditioner in accordance with an embodiment of the present invention.

First, the single stage thermostat 31 detects an indoor temperature (S1), compares the detected indoor temperature and a desired temperature predetermined by a user. Thereafter, the single stage thermostat 31 generates a driving signal based on the compared result, and then outputs the generated driving signal to the single stage indoor unit 32.

The single stage indoor unit 32 generates a single stage control signal Y for on-off controlling the indoor fan 35 and the compressor on the basis of the driving signal (S2). Here, operations of the single stage thermostat 31 and the single stage indoor unit 32 are same as operations in the conventional art, of which explanation will be thus omitted.

Thereafter, if the single stage control signal Y is generated, the converter 34 measures a generation time of the single stage control signal Y (S3) and at the same time generates the first control signal Y1 for driving only the small compression capacity compressor of the two-stage outdoor unit 33 and rotating the indoor fan 35 at a low speed. The converter 34 thereafter outputs the generated first control signal Y1 to the indoor fan 35 and the two-stage outdoor unit 33. At this time, the indoor fan 35 supplies cold blast or hot blast indoors by being rotated at a low speed on the basis of the first control signal, and the two-stage outdoor unit 33 drives only the small compression capacity compressor, depending on the first control signal.

Then, if the generation time of the single stage control signal exceeds the predetermined reference time (e.g., 10 minutes) (S5), the converter 34 generates the second control signal Y2 for simultaneously driving the small compression capacity compressor and the large compression capacity compressor of the two-stage outdoor unit 33 and for rotating the indoor fan 35 at a high speed, and then outputs the generated second control signal to the indoor fan 35 and the two-stage outdoor unit 33. At this time, the indoor fan 35 is rotated at a high speed based on the second control signal, and the two-stage outdoor unit 33 drives the small compression capacity compressor and the large compression capacity compressor at the same time, on the basis of the second control signal.

On the other hand, if the single stage control signal is generated after the predetermined limitation time (e.g., one hour) elapses, the converter 34 generates the second control signal and outputs the generated second control signal to the indoor fan 35 and the two-stage outdoor unit 33. At this time, the indoor fan 35 is rotated at a high speed based on the second control signal, and the two-stage outdoor unit 33 drives the small compression capacity compressor and the large compression capacity compressor simultaneously on the basis of the second control signal. That is, if the single stage control signal is generated after the predetermined limitation time (e.g., one hour) elapses, the converter 34 outputs the second control signal to the indoor fan 35 and the two-stage outdoor unit 33 for cooling or heating the indoor room rapidly.

As described above, in the present invention, it is advantageous that the single stage indoor unit can be connected to the two-stage outdoor unit by converting the single stage control signal into the two-stage control signal, depending on the generation time of the single stage control signal.

Additionally, the costs to purchase the two-stage indoor unit can be effectively reduced by converting the single stage control signal into the two-stage control signal, depending on the generation time of the single stage control signal.

Furthermore, according to the present invention, it is also advantageous to improve an ability to correspond to a heating load or a cooling load by connecting the single stage indoor unit to the two-stage outdoor unit.

## Claims

1. An air-conditioner, comprising:
a converter (34) which receives a first control signal for on-off controlling an indoor fan of an indoor unit (32) and a compressor of an outdoor unit in the air-conditioner, and
generates a second control signal for rotating the indoor fan (35) at a high or a low speed and varying a compression capacity of the compressor of the outdoor unit on the basis of a generation time of the received first control signal.

2. The air-conditioner of claim 1, wherein the converter generates a control signal for driving the small compression capacity compressor of the outdoor unit and rotating the indoor fan at a low speed, when the first control signal is generated.

3. The air-conditioner of claim 1, wherein the converter generates a control signal for simultaneously driving the large compression capacity compressor and the small compression capacity compressor of the outdoor unit and for rotating the indoor fan at a high speed, when the first control signal is generated after a predetermined reference time elapses.

4. The air-conditioner of claim 1, wherein the converter generates a control signal for simultaneously driving the large compression capacity compressor and the small compression capacity compressor of the outdoor unit and for rotating the indoor fan at a high speed when the first control signal is generated after the predetermined time elapses.

5. A method for controlling a driving of an air-conditioner, comprising the steps of:
receiving (52) a first control signal for on-off controlling an indoor fan (35) of an indoor unit (32) and a compressor of an outdoor unit in the air-conditioner;
measuring (53) a generation time of the received first control signal; and
rotating (54, 56) the indoor fan at a high or a low speed and varying a compression capacity of the compressor in the outdoor unit, depending on the measured generation time.

6. The method of claim 5, wherein the step of rotating the indoor fan at a high or a low speed, or varying the compression capacity of the outdoor unit is a step of driving only the small compression capacity compressor in the outdoor unit and rotating the indoor fan at a low speed, when the first control signal is generated.

7. The method of claim 5, wherein the step of rotating the indoor fan at a high or a low speed, or varying the compression capacity of the outdoor unit is a step of simultaneously driving the large compression capacity compressor and the small compression capacity compressor in the outdoor unit and rotating the indoor fan at a high speed, when the first control signal is generated after a predetermined reference time elapses.

8. The method of claim 5, further comprising the step of:
simultaneously driving the large compression capacity compressor and the small compression capacity compressor in the outdoor unit and rotating the indoor fan at a high speed, when the first control signal is generated after a predetermined time elapses.

9. The air-conditioner of claim 1, further comprising:
an indoor fan;
an outdoor unit having at least one or more compressors driven with respectively different compression capacities;
an indoor unit for generating a first control signal to on-off control the compressor of the outdoor unit and the indoor fan, depending on an indoor temperature and a temperature predetermined by a user.

10. The air-conditioner of claim 9, wherein the converter generates a control signal for driving the compressor in the outdoor unit with a small compression capacity or a large compression capacity on the basis of the generation time of the first control signal.

11. The air-conditioner of claim 9, wherein the outdoor unit includes a large compression capacity compressor and a small compression capacity compressor, and the indoor fan is rotated at a low speed when only the small compression capacity compressor is driven according to the second control signal, while the indoor fan is rotated at a high speed when both the large compression capacity compressor and the small compression capacity compressor are driven simultaneously according to the second control signal.

12. The air-conditioner of claim 9, wherein the converter generates a control signal for driving the small compression capacity compressor in the outdoor unit and rotating the indoor fan at a low speed, when the first control signal is generated.

13. The air-conditioner of claim 9, wherein the converter generates a control signal for simultaneously driving the large compression capacity compressor and the small compression capacity compressor in the outdoor unit and for rotating the indoor fan at a high speed, when the first control signal is generated after a predetermined reference time elapses.

14. The air-conditioner of claim 9, wherein the converter generates a control signal for simultaneously driving the large compression capacity compressor and the small compression capacity compressor in the outdoor unit and for rotating the indoor fan at a high speed, when the first control signal is generated after a predetermined time elapses.

15. The method of claim 5, **characterized in that**:
it further comprises the step of generating a first control signal for on-off controlling an indoor fan of an indoor unit and a compressor of an outdoor unit,
depending on an indoor temperature and a temperature predetermined by a user;
it further comprises the step of comparing the measured time with a predetermined reference time; and
wherein the second control signal depends on the compared result.

16. The method of claim 15, wherein the step of generating the second control signal includes the steps of:
generating a control signal for driving the small compression capacity compressor in the outdoor unit and
rotating the indoor fan at a low speed, when the first control signal is generated;
generating a control signal for simultaneously driving the large compression capacity compressor and the small compression capacity compressor in the outdoor unit and
rotating the indoor fan at a high speed, when the first control signal is generated after a predetermined reference time elapses; and
generating a control signal for simultaneously driving the large compression capacity compressor and the small compression capacity compressor in the outdoor unit and
rotating the indoor fan at a high speed, when the first control signal is generated after a predetermined time elapses.

17. The air-conditioner of claim 1, further comprising:
an indoor fan rotated at a high or a low speed on the basis of a two-stage control signal;
a two-stage outdoor unit for driving internal compressors with a small compression capacity or a large compression capacity on the basis of the two-stage control signal;
a single stage thermostat for generating a driving signal on the basis of an indoor temperature and a temperature predetermined by a user; ,
a single stage indoor unit for generating a single stage control signal to on-off control the compressor and the indoor fan, depending on the driving signal

18. The air-conditioner of claim 17, wherein the converter measures a generation time of the single stage control signal and, at the same time, generates a first control signal to rotate the indoor fan at a low speed, driving only the small compression capacity compressor in the two-stage outdoor unit, when the single stage control signal is generated.

19. The air-conditioner of claim 17, wherein the converter generates a second control signal for simultaneously driving the small compression capacity compressor and the large compression capacity compressor in the two-stage outdoor unit and rotating the indoor fan at a high speed, when the single stage control signal is generated after a predetermined reference time elapses, and then outputs the generated second control signal to the indoor fan and the two-stage outdoor unit.

20. The air-conditioner of claim 17, wherein the converter generates a second control signal for simultaneously driving the small compression capacity compressor and the large compression capacity compressor in the two-stage outdoor unit and rotating the indoor fan at a high speed, when the single stage control signal is generated after a predetermined time elapses, and then outputs the generated second control signal to the indoor fan and the two-stage outdoor unit.

## Patentansprüche

1. Klimaanlage, umfassend:
einen Wandler (34), der ein erstes Steuersignal zur Ein-/Aus-Steuerung eines Innengebläses einer Inneneinheit (32) und eines Kompressors einer Außeneinheit in der Klimaanlage empfängt und ein zweites Steuersignal zum Drehen des Innengebläses (35) auf einer hohen oder einer niedrigen Geschwindigkeit und Variieren einer Kompressionsleistung des Kompressors der Außeneinheit auf der Grundlage einer Erzeugungszeit des empfangenen ersten Steuersignals erzeugt.

2. Klimaanlage nach Anspruch 1, wobei der Wandler ein Steuersignal zum Antreiben des Kompressors mit kleiner Kompressionsleistung der Außeneinheit und Drehen des Innengebläses auf einer niedrigen Geschwindigkeit erzeugt, wenn das erste Steuersignal erzeugt wird.

3. Klimaanlage nach Anspruch 1, wobei der Wandler ein Steuersignal zum gleichzeitigen Antreiben des Kompressors mit großer Kompressionsleistung und des Kompressors mit kleiner Kompressionsleistung der Außeneinheit und zum Drehen des Innengebläses auf einer hohen Geschwindigkeit erzeugt, wenn das erste Steuersignal nach dem Ablauf einer vorgegebenen Bezugszeit erzeugt wird.

4. Klimaanlage nach Anspruch 1, wobei der Wandler ein Steuersignal zum gleichzeitigen Antreiben des Kompressors mit großer Kompressionsleistung und des Kompressors mit kleiner Kompressionsleistung der Außeneinheit und zum Drehen des Innengebläses auf einer hohen Geschwindigkeit erzeugt, wenn das erste Steuersignal nach dem Ablauf der vorgegebenen Zeit erzeugt wird.

5. Verfahren zum Steuern eines Antreibens einer Klimaanlage, folgende Schritte umfassend:
Empfangen (52) eines ersten Steuersignals zur Ein-/Aus-Steuerung eines Innengebläses (35) einer Inneneinheit (32) und eines Kompressors einer Außeneinheit in der Klimaanlage;
Messen (53) einer Erzeugungszeit des empfangenen ersten Steuersignals; und
Drehen (54, 56) des Innengebläses auf einer hohen oder einer niedrigen Geschwindigkeit und Variieren einer Kompressionsleistung des Kompressors in der Außeneinheit abhängig von der gemessenen Erzeugungszeit.

6. Verfahren nach Anspruch 5, wobei der Schritt des Drehens des Innengebläses auf einer hohen oder einer niedrigen Geschwindigkeit oder Variierens der Kompressionsleistung der Außeneinheit ein Schritt des Antreibens nur des Kompressors mit kleiner Kompressionsleistung in der Außeneinheit und Drehens des Innengebläses auf einer niedrigen Geschwindigkeit ist, wenn das erste Steuersignal erzeugt wird.

7. Verfahren nach Anspruch 5, wobei der Schritt des Drehens des Innengebläses auf einer hohen oder einer niedrigen Geschwindigkeit oder Variierens der Kompressionsleistung der Außeneinheit ein Schritt des gleichzeitigen Antreibens des Kompressors mit großer Kompressionsleistung und des Kompressors mit kleiner Kompressionsleistung in der Außeneinheit und Drehens des Innengebläses auf einer hohen Geschwindigkeit ist, wenn das erste Steuersignal nach dem Ablauf einer vorgegebenen Bezugszeit erzeugt wird.

8. Verfahren nach Anspruch 5, ferner umfassend den Schritt des
gleichzeitigen Antreibens des Kompressors mit großer Kompressionsleistung und des Kompressors mit kleiner Kompressionsleistung in der Außeneinheit und Drehens des Innengebläses auf einer hohen Geschwindigkeit, wenn das erste Steuersignal nach dem Ablauf einer vorgegebenen Zeit erzeugt wird.

9. Klimaanlage nach Anspruch 1, ferner umfassend:
ein Innengebläse;
eine Außeneinheit mit zumindest einem oder mehr Kompressoren, die mit jeweils verschiedenen Kompressionsleistungen angetrieben sind;
eine Inneneinheit zum Erzeugen eines ersten Steuersignals zur Ein-/Aus-Steuerung des Kompressors der Außeneinheit und des Innengebläses abhängig von einer Innentemperatur und einer Temperatur, die vom Benutzer vorgegeben ist.

10. Klimaanlage nach Anspruch 9, wobei der Wandler ein Steuersignal zum Antreiben des Kompressors in der Außeneinheit mit einer kleinen Kompressionsleistung oder einer großen Kompressionsleistung auf der Grundlage der Erzeugungszeit des ersten Steuersignals erzeugt.

11. Klimaanlage nach Anspruch 9, wobei die Außeneinheit einen Kompressor mit großer Kompressionsleistung und einen Kompressor mit kleiner Kompressionsleistung enthält und das Innengebläse auf einer niedrigen Geschwindigkeit gedreht wird, wenn nur der Kompressor mit kleiner Kompressionsleistung gemäß dem zweiten Steuersignal angetrieben ist, während das Innengebläse auf einer hohen Geschwindigkeit gedreht wird, wenn der Kompressor mit großer Kompressionsleistung und der Kompressor mit kleiner Kompressionsleistung beide gleichzeitig gemäß dem zweiten Steuersignal angetrieben sind.

12. Klimaanlage nach Anspruch 9, wobei der Wandler ein Steuersignal zum Antreiben des Kompressors mit kleiner Kompressionsleistung in der Außeneinheit und Drehen des Innengebläses auf einer niedrigen Geschwindigkeit erzeugt, wenn das erste Steuersignal erzeugt wird.

13. Klimaanlage nach Anspruch 9, wobei der Wandler ein Steuersignal zum gleichzeitigen Antreiben des Kompressors mit großer Kompressorleistung und des Kompressors mit kleiner Kompressionsleistung in der Außeneinheit und zum Drehen des Innengebläses auf einer hohen Geschwindigkeit erzeugt, wenn das erste Steuersignal nach dem Ablauf einer vorgegebenen Bezugszeit erzeugt wird.

14. Klimaanlage nach Anspruch 9, wobei der Wandler ein Steuersignal zum gleichzeitigen Antreiben des Kompressors mit großer Kompressorleistung und des Kompressors mit kleiner Kompressionsleistung in der Außeneinheit und zum Drehen des Innengebläses auf einer hohen Geschwindigkeit erzeugt, wenn das erste Steuersignal nach dem Ablauf einer vorgegebenen Zeit erzeugt wird.

15. Verfahren nach Anspruch 5, **dadurch gekennzeichnet, dass**
es ferner den Schritt des Erzeugens eines ersten Steuersignals zur Ein-/Aus-Steuerung eines Innengebläses einer Inneneinheit und eines Kompressors einer Außeneinheit abhängig von einer Innentemperatur und einer Temperatur, die von einem Benutzer vorgegeben ist, umfasst;
es ferner den Schritt des Vergleichens der gemessenen Zeit mit einer vorgegebenen Bezugszeit umfasst; und
wobei das zweite Steuersignal von dem Vergleichsergebnis abhängt.

16. Verfahren nach Anspruch 15, wobei der Schritt des Erzeugens des zweiten Steuersignals folgende Schritte enthält:
Erzeugen eines Steuersignals zum Antreiben des Kompressors mit kleiner Kompressionsleistung in der Außeneinheit und
Drehen des Innengebläses auf einer niedrigen Geschwindigkeit, wenn das erste Steuersignal erzeugt wird;
Erzeugen eines Steuersignals zum gleichzeitigen Antreiben des Kompressors mit großer Kompressionsleistung und des Kompressors mit kleiner Kompressionsleistung in der Außeneinheit und Drehen des Innengebläses auf einer hohen Geschwindigkeit, wenn das erste Steuersignal nach dem Ablauf einer vorgegebenen Bezugszeit erzeugt wird, und Erzeugen eines Steuersignals zum gleichzeitigen Antreiben des Kompressors mit großer Kompressionsleistung und des Kompressors mit kleiner Kompressionsleistung in der Außeneinheit und Drehen des Innengebläses auf einer hohen Geschwindigkeit, wenn das erste Steuersignal nach dem Ablauf einer vorgegebenen Zeit erzeugt wird.

17. Klimaanlage nach Anspruch 1, ferner umfassend:
ein Innengebläse, das auf der Grundlage eines zweistufigen Steuersignals auf einer hohen oder einer niedrigen Geschwindigkeit gedreht wird;
eine zweistufige Außeneinheit zum Antreiben interner Kompressoren mit einer kleinen Kompressionsleistung oder
einer großen Kompressionsleistung auf der Grundlage des zweistufigen Steuersignals;
einen einstufigen Thermostat zum Erzeugen eines Antriebssignals auf der Grundlage einer Innentemperatur und einer Temperatur, die von einem Benutzer vorgegeben ist;
eine einstufige Inneneinheit zum Erzeugen eines einstufigen Steuersignals zur Ein-/Aus-Steuerung des Kompressors und des Innengebläses abhängig von dem Antriebssignal.

18. Klimaanlage nach Anspruch 17, wobei der Wandler eine Erzeugungszeit des einstufigen Steuersignals misst und zur gleichen Zeit ein erstes Steuersignal zum Drehen des Innengebläses auf einer niedrigen Geschwindigkeit erzeugt, wobei er nur den Kompressor mit kleiner Kompressionsleistung in der zweistufigen Außeneinheit antreibt, wenn das einstufige Steuersignal erzeugt wird.

19. Klimaanlage nach Anspruch 17, wobei der Wandler ein zweites Steuersignal zum gleichzeitigen Antreiben des Kompressors mit kleiner Kompressionsleistung und des Kompressors mit großer Kompressionsleistung in der zweistufigen Außeneinheit und Drehen des Innengebläses auf einer hohen Geschwindigkeit erzeugt, wenn das einstufige Steuersignal nach dem Ablauf einer vorgegebenen Bezugszeit erzeugt wird, und dann das erzeugte zweite Steuersignal dem Innengebläse und der zweistufigen Außeneinheit zuleitet.

20. Klimaanlage nach Anspruch 17, wobei der Wandler ein zweites Steuersignal zum gleichzeitigen Antreiben des Kompressors mit kleiner Kompressionsleistung und des Kompressors mit großer Kompressionsleistung in der zweistufigen Außeneinheit und Drehen des Innengebläses auf einer hohen Geschwindigkeit erzeugt, wenn das einstufige Steuersignal nach dem Ablauf einer vorgegebenen Zeit erzeugt wird, und dann das erzeugte zweite Steuersignal dem Innengebläse und der zweistufigen Außeneinheit zuleitet.

## Revendications

1. Climatiseur comprenant :
un convertisseur (34) qui reçoit un premier signal de commande pour commander l'activation-désactivation d'un ventilateur intérieur d'une unité intérieure (32) et d'un compresseur d'une unité extérieure dans le climatiseur,
et génère un deuxième signal de commande pour faire tourner le ventilateur intérieur (35) à un régime haut ou bas et pour faire varier une capacité de compression du compresseur de l'unité extérieure sur la base d'un temps de génération du premier signal de commande reçu.

2. Climatiseur selon la revendication 1, dans lequel le convertisseur génère un signal de commande pour entraîner le compresseur à petite capacité de compression de l'unité extérieure et pour faire tourner le ventilateur intérieur à un régime bas, lorsque le premier signal de commande est généré.

3. Climatiseur selon la revendication 1, dans lequel le convertisseur génère un signal de commande pour entraîner simultanément le compresseur à grande capacité de compression et le compresseur à petite capacité de compression de l'unité extérieure et pour faire tourner le ventilateur intérieur à un régime haut, lorsque le premier signal de commande est généré après l'écoulement d'un temps de référence prédéterminé.

4. Climatiseur selon la revendication 1, dans lequel le convertisseur génère un signal de commande pour entraîner simultanément le compresseur à grande capacité de compression et le compresseur à petite capacité de compression de l'unité extérieure et pour faire tourner le ventilateur intérieur à un régime haut lorsque le premier signal de commande est généré après l'écoulement du temps prédéterminé.

5. Procédé pour commander un entraînement d'un climatiseur, comprenant les étapes consistant à :
recevoir (52) un premier signal de commande pour commander l'activation-désactivation d'un ventilateur intérieur (35) d'une unité intérieure (32) et d'un compresseur d'une unité extérieure dans le climatiseur ;
mesurer (53) un temps de génération du premier signal de commande reçu ; et
faire tourner (54, 56) le ventilateur intérieur à un régime haut ou bas et faire varier une capacité de compression du compresseur de l'unité extérieure en fonction du temps de génération mesuré.

6. Procédé selon la revendication 5, dans lequel l'étape consistant à faire tourner le ventilateur intérieur à un régime haut ou bas ou à faire varier la capacité de compression de l'unité extérieure est une étape consistant à entraîner uniquement le compresseur à petite capacité de compression de l'unité extérieure et à faire tourner le ventilateur intérieur à un régime bas, lorsque le premier signal de commande est généré.

7. Procédé selon la revendication 5, dans lequel l'étape consistant à faire tourner le ventilateur intérieur à un régime haut ou bas ou à faire varier la capacité de compression de l'unité extérieure est une étape consistant à entraîner simultanément le compresseur à grande capacité de compression et le compresseur à petite capacité de compression de l'unité extérieure et à faire tourner le ventilateur intérieur à un régime haut, lorsque le premier signal de commande est généré après l'écoulement d'un temps de référence prédéterminé.

8. Procédé selon la revendication 5, comprenant en outre l'étape consistant à :
entraîner simultanément le compresseur à grande capacité de compression et le compresseur à petite capacité de compression de l'unité extérieure et faire tourner le ventilateur intérieur à un régime haut lorsque le premier signal de commande est généré après l'écoulement d'un temps prédéterminé.

9. Climatiseur selon la revendication 1, comprenant en outre
un ventilateur intérieur ;
une unité extérieure ayant au moins un ou plusieurs compresseurs entraînés avec des capacités de compression respectivement différentes ;
une unité intérieure pour générer un premier signal de commande pour commander l'activation-désactivation du compresseur de l'unité extérieure et du ventilateur intérieur en fonction d'une température intérieure et d'une température prédéterminée par un utilisateur.

10. Climatiseur selon la revendication 9, dans lequel le convertisseur génère un signal de commande pour entraîner le compresseur dans l'unité extérieure avec une petite capacité de compression ou une grande capacité de compression sur la base du temps de génération du premier signal de commande.

11. Climatiseur selon la revendication 9, dans lequel l'unité extérieure comprend un compresseur à grande capacité de compression et un compresseur à petite capacité de compression, et le ventilateur intérieur est mis en rotation à un régime bas lorsqu'uniquement le compresseur à petite capacité de compression est entraîné en fonction du deuxième signal de commande, alors que le ventilateur intérieur est mis en rotation à un régime haut lorsque le compresseur à grande capacité de compression et le compresseur à petite capacité de compression sont entraînés simultanément en fonction du deuxième signal de commande.

12. Climatiseur selon la revendication 9, dans lequel le convertisseur génère un signal de commande pour entraîner le compresseur à petite capacité de compression dans l'unité extérieure et pour faire tourner le ventilateur intérieur à un régime bas, lorsque le premier signal de commande est généré.

13. Climatiseur selon la revendication 9, dans lequel le convertisseur génère un signal de commande pour entraîner simultanément le compresseur à grande capacité de compression et le compresseur à petite capacité de compression dans l'unité extérieure et pour faire tourner le ventilateur intérieur à un régime haut, lorsque le premier signal de commande est généré après l'écoulement d'un temps de référence prédéterminé.

14. Climatiseur selon la revendication 9, dans lequel le convertisseur génère un signal de commande pour entraîner simultanément le compresseur à grande capacité de compression et le compresseur à petite capacité de compression dans l'unité extérieure et pour faire tourner le ventilateur intérieur à un régime haut, lorsque le premier signal de commande est généré après l'écoulement d'un temps de référence prédéterminé.

15. Procédé selon la revendication 5, **caractérisé en ce que** :
il comprend en outre l'étape consistant à générer un premier signal de commande pour commander l'activation-désactivation d'un ventilateur intérieur d'une unité intérieure et d'un compresseur d'une unité extérieure en fonction d'une température intérieure et d'une température prédéterminée par un utilisateur ;
il comprend en outre l'étape consistant à comparer le temps mesuré à un temps de référence prédéterminé ; et
dans lequel le deuxième signal de commande dépend du résultat comparé.

16. Procédé selon la revendication 15, dans lequel l'étape de génération du deuxième signal de commande comprend les étapes consistant à :
générer un signal de commande pour entraîner le compresseur à petite capacité de compression dans l'unité extérieure et pour faire tourner le ventilateur intérieur à un régime bas, lorsque le premier signal de commande est généré ;
générer un signal de commande pour entraîner simultanément le compresseur à grande capacité de compression et le compresseur à petite capacité de compression dans l'unité extérieure et pour faire tourner le ventilateur intérieur à un régime haut, lorsque le premier signal de commande est généré après l'écoulement d'un temps de référence prédéterminé ; et
générer un signal de commande pour entraîner simultanément le compresseur à grande capacité de compression et le compresseur à petite capacité de compression dans l'unité extérieure et pour faire tourner le ventilateur intérieur à un régime haut, lorsque le premier signal de commande est généré après l'écoulement d'un temps de référence prédéterminé.

17. Climatiseur selon la revendication 1, comprenant en outre
un ventilateur intérieur mis en rotation à un régime haut ou bas sur la base d'un signal de commande à deux étages
;
une unité extérieure à deux étages pour entraîner des compresseurs internes avec une petite capacité de compression ou une grande capacité de compression sur la base du signal de commande à deux étages ;
un thermostat à un étage pour générer un signal de commande sur la base d'une température intérieure et d'une température prédéterminée par un utilisateur ; une unité intérieure à un étage pour générer un signal de commande à un étage pour commander l'activation-désactivation du compresseur et du ventilateur intérieur en fonction du signal de commande.

18. Climatiseur selon la revendication 17, dans lequel le convertisseur mesure un temps de génération du signal de commande à un étage et, en même temps, génère un premier signal de commande pour faire tourner le ventilateur intérieur à un régime bas, en entraînant uniquement le compresseur à petite capacité de compression dans l'unité extérieure à deux étages, lorsque le signal de commande à un étage est généré.

19. Climatiseur selon la revendication 17, dans lequel le convertisseur génère un deuxième signal de commande pour entraîner simultanément le compresseur à petite capacité de compression et le compresseur à grande capacité de compression dans l'unité extérieure à deux étages et pour faire tourner le ventilateur intérieur à un régime haut, lorsque le signal de commande à un étage est généré après l'écoulement d'un temps de référence prédéterminé, puis délivre le deuxième signal de commande généré au ventilateur intérieur et à l'unité extérieure à deux étages.

20. Climatiseur selon la revendication 17, dans lequel le convertisseur génère un deuxième signal de commande pour entraîner simultanément le compresseur à petite capacité de compression et le compresseur à grande capacité de compression dans l'unité extérieure à deux étages et pour faire tourner le ventilateur intérieur à un régime haut, lorsque le signal de commande à un étage est généré après l'écoulement d'un temps prédéterminé, puis délivre le deuxième signal de commande généré au ventilateur intérieur et à l'unité extérieure à deux étages.
